# DEMANDE DE BREVET EUROPEEN

(11) **EP 4 803 374 A1**
(43) Date de publication de la demande: **09.09.2026**
(21) Numéro de dépôt: 26154610.5
(22) Date de dépôt: 28.01.2026
(51) Int. Cl.: B60Q 3/14, B60Q 3/233, B60Q 3/54, B60Q 3/225, B60K 37/20

(54) **ÉQUIPEMENT À PIÈCE DE TISSU RÉTROÉCLAIRÉE ET PARTICIPANT À L'ÉCLAIRAGE D'UN AUTRE ÉQUIPEMENT D'UN SYSTÈME**

(30) Priorité: 07.03.2025 FR 2502285
(71) Demandeur: Stellantis Auto SAS, 78300 Poissy (FR)
(72) Inventeur: DUMUR, DENIS, 78990 ELANCOURT (FR); PINTAT, BRUNO, 92160 ANTHONY (FR); GUIDEZ, FREDERIC, 75015 PARIS 15 (FR); JACQUEMARD, IVAN, 92130 ISSY LES MOULINEAUX (FR); LE DALL, CHRISTOPHE, 92500 RUEIL MALMAISON (FR)
(74) Mandataire: BCIP

(57) **Abrégé**

Un équipement (ES) équipe un système, et comprend une première paroi (P1) et une pièce de tissu (PT) comportant respectivement des première (FI1) et seconde (FI2) faces internes entre lesquelles est installée une source de photons (SP) propre à générer des photons assurant un rétroéclairage de cette seconde face interne (FI2). Cette première paroi (P1) comprend au moins un premier trou traversant (TT1) propre à être traversé par des photons générés destinés à éclairer une zone (Z) qui est située devant sa face externe (FE1), opposée à sa première face interne (FI1).

## Description

### Domaine technique de l'invention

L'invention concerne les équipements propres à équiper des systèmes et devant être au moins partiellement rétroéclairés.

### Etat de la technique

Certains systèmes, comme par exemple certains véhicules, éventuellement de type automobile, comprennent au moins un équipement comportant une paroi rigide et une pièce de tissu comportant respectivement des première et seconde faces internes entre lesquelles est installée une source de photons propre à générer des photons assurant un rétroéclairage de cette seconde face interne.

Dans le cas d'un véhicule, un tel équipement peut, par exemple, être une planche de bord ou un accoudoir de porte latérale.

Ce type d'équipement à pièce de tissu rétroéclairée est parfois installé à proximité d'un autre équipement de son système qui doit faire l'objet d'un éclairage, éventuellement d'ambiance. Par exemple, dans le cas d'un véhicule, un tel autre équipement peut, par exemple, être une boîte à gants ou un rangement défini dans une porte latérale ou encore une zone concave d'une paroi de porte latérale.

Actuellement, l'éclairage de cet autre équipement se fait au moyen d'un dispositif d'éclairage qui lui est dédié, et qui pose fréquemment un problème de positionnement et/ou d'intégration. Cela augmente l'encombrement local, le poids, les coûts, et la consommation d'énergie électrique car le dispositif d'éclairage précité comporte aussi sa propre source de photons. On notera qu'au moins dans le cas d'un véhicule à groupe motopropulseur (ou GMP) purement électrique, cette consommation additionnelle et ce poids additionnel du dispositif d'éclairage contribue à réduire l'autonomie kilométrique.

L'invention a donc notamment pour but d'améliorer la situation.

### Présentation de l'invention

Elle propose notamment à cet effet un équipement propre à équiper un système et comprenant une première paroi et une pièce de tissu comportant respectivement des première et seconde faces internes entre lesquelles est installée une source de photons propre à générer des photons assurant un rétroéclairage de cette seconde face interne.

Cet équipement se caractérise par le fait que sa première paroi comprend au moins un premier trou traversant qui est propre à être traversé par des photons générés destinés à éclairer une zone située devant une face externe de la première paroi, opposée à sa première face interne.

Grâce à cette mutualisation de la source de photons on évite désormais tout problème de positionnement et/ou d'intégration d'un dispositif d'éclairage additionnel, et toutes augmentations de l'encombrement local, du poids, des coûts, et de la consommation d'énergie électrique.

L'équipement selon l'invention peut comporter d'autres caractéristiques qui peuvent être prises séparément ou en combinaison, et notamment :
- au moins un premier trou traversant peut loger une pièce translucide propre à diffuser dans la zone les photons générés qu'elle reçoit ;
- au moins un premier trou traversant peut définir une partie au moins d'un élément graphique choisi parmi une marque, un logo, et un dessin ;
- il peut aussi comprendre un film réflecteur intercalé entre sa source de photons et la première face interne de sa première paroi, propre à réfléchir les photons générés qu'il reçoit vers la seconde face interne de sa pièce de tissu, et comprenant un second trou traversant en correspondance de chaque premier trou traversant pour le passage de photons vers ce dernier ;
- il peut aussi comprendre une seconde paroi translucide, intercalée entre sa source de photons et la seconde face interne de sa pièce de tissu, et à laquelle est couplée sa pièce de tissu ;
- en présence de la dernière option, sa seconde paroi peut être solidarisée à sa première paroi, en étant espacée de cette dernière d'une distance choisie ;
- également en présence de la dernière option, il peut aussi comprendre une première couche de mousse d'espacement translucide et intercalée entre sa seconde paroi et la seconde face interne de sa pièce de tissu et/ou une seconde couche de mousse d'espacement translucide et intercalée entre sa seconde paroi et sa source de photons ;
- sa source de photons peut comprendre au moins deux diodes électroluminescentes distantes.

L'invention propose également un système comprenant au moins un équipement du type de celui présenté ci-avant.

Par exemple, ce système peut constituer un véhicule, éventuellement de type automobile. Dans ce cas, le (chaque) équipement peut être choisi parmi une planche de bord et un accoudoir de porte latérale, par exemple.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement, dans une vue en coupe dans un plan transversal et vertical, une partie d'un premier exemple de réalisation d'un équipement selon l'invention,
[Fig. 2] illustre schématiquement et fonctionnellement, dans une vue en coupe dans un plan transversal et vertical, une partie d'un deuxième exemple de réalisation d'un équipement selon l'invention, et
[Fig. 3] illustre schématiquement et fonctionnellement, dans une vue en coupe dans un plan transversal et vertical, une partie d'un troisième exemple de réalisation d'un équipement selon l'invention.

### Description détaillée de l'invention

L'invention a notamment pour but de proposer un équipement ES à pièce de tissu PT rétroéclairée et participant à l'éclairage d'un autre équipement au sein d'un système.

Dans ce qui suit, on considère, à titre d'exemple non limitatif, que le système est un véhicule (éventuellement de type automobile). Mais l'invention n'est pas limitée à ce type de système. Elle concerne en effet tout système comprenant un premier équipement comportant une pièce de tissu devant faire l'objet d'un rétroéclairage et un second équipement placé juste à côté de ce premier équipement et devant être éclairé. Par conséquent, un équipement ES selon l'invention peut faire partie d'un véhicule (terrestre, maritime (ou fluvial), ou aérien), d'un appareil électrique (éventuellement grand public), d'une installation électrifiée (éventuellement industrielle), ou d'un bâtiment électrifié, par exemple.

Par ailleurs, on considère dans ce qui suit, à titre d'exemple non limitatif, que l'équipement ES selon l'invention est une planche de bord d'un véhicule (installée dans l'habitacle de ce dernier), et que l'autre équipement à éclairer est une boîte à gants installée sous cette planche de bord ES. Mais l'invention n'est pas limitée à cette application. Ainsi, l'équipement ES selon l'invention pourrait être un accoudoir d'une porte latérale d'un véhicule et l'autre équipement à éclairer pourrait être un rangement (éventuellement un vide-poche) défini dans une porte latérale sous cet accoudoir ES ou bien une zone concave d'une paroi d'une porte latérale définie derrière cet accoudoir ES, par exemple.

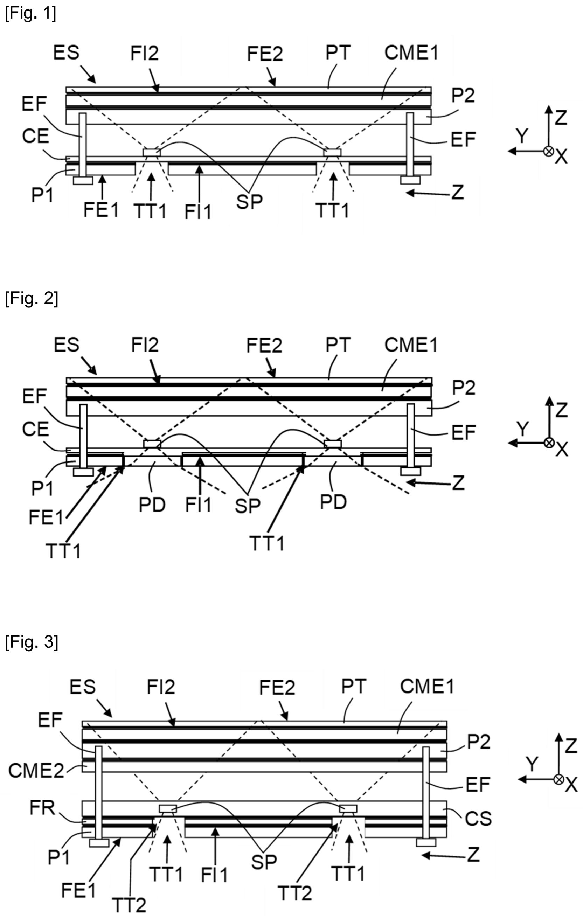

Sur les figures 1 à 3 la direction X est la direction longitudinale du véhicule (ou système), laquelle est sensiblement parallèle aux côtés latéraux (ou longitudinaux) comportant les portières latérales, la direction Y est la direction transversale du véhicule (ou système), laquelle est perpendiculaire à la direction longitudinale X, et la direction Z est la direction verticale du véhicule (ou système), laquelle est perpendiculaire aux directions longitudinale X et transversale Y.

On a schématiquement illustré sur les figures 1 à 3 respectivement trois exemples de réalisation différents d'un équipement ES selon l'invention, ici une planche de bord.

Comme illustré sur les figures 1 à 3, un équipement ES, selon l'invention, comprend au moins une première paroi P1, une pièce de tissu PT et une source de photons SP.

La première paroi P1 est rigide et comprend une première face interne FI1 et une première face externe FE1 opposées. Ici, la première face interne FI1 est orientée vers la pièce de tissu PT et donc vers le haut (en étant sensiblement installée dans un plan XY), et la première face externe FE1 est orientée au moins en partie vers un autre équipement comprenant une zone Z à éclairer (ici une boîte à gants), et donc vers le bas (en étant sensiblement installée dans un plan XY).

La pièce de tissu PT assure, ici, au moins localement l'habillage de la planche de bord ES et donc fait partie de ce que l'on appelle généralement la peau de la planche de bord ES. Elle (PT) comprend une seconde face interne FI2 et une seconde face externe FE2 opposées. Ici, la seconde face interne FI2 est orientée vers la première paroi P1 et donc vers le bas (en étant sensiblement installée dans un plan XY), et la seconde face externe FE2 est orientée vers l'extérieur et donc vers le haut. Cette seconde face externe FE2 est donc visible, ici, par une personne installée dans l'habitacle du véhicule comprenant la planche de bord ES.

La source de photons SP est installée entre les première FI1 et seconde FI2 faces internes, et est agencée de manière à générer des photons assurant un rétroéclairage de la seconde face interne FI2.

Par exemple, cette source de photons SP peut comprendre au moins deux diodes électroluminescentes (ou leds (« Light Emitting Diodes »)) distantes. Mais en variante elle pourrait comprendre au moins deux diodes laser ou au moins deux lasers à gaz ou encore au moins deux ampoules, par exemple.

De plus, la première paroi P1 comprend au moins un premier trou traversant TT1 qui est propre à être traversé par des photons générés par la source de photons SP et destinés à éclairer la zone Z située devant (ici en-dessous de) la face externe FE1 de la première paroi P1 (et ici contenue dans la boîte à gants).

Ainsi, la source de photons SP est mutualisée afin d'assurer non seulement le rétroéclairage de la pièce de tissu PT afin qu'elle apparaisse (au moins localement) lumineuse vue de l'extérieur, mais aussi l'éclairage de la zone Z et donc d'une partie de l'autre équipement (ici une boîte à gants). Cela est particulièrement avantageux car cela permet d'éviter tout problème de positionnement et/ou d'intégration d'un dispositif d'éclairage additionnel, et toutes augmentations de l'encombrement local, du poids, des coûts, et de la consommation d'énergie électrique.

On notera que dans les trois exemples illustrés respectivement sur les figures 1 à 3 chaque premier trou traversant TT1 est placé en regard (ici en-dessous) d'une sous-partie (ici une diode électroluminescente) de la source de photons SP. Mais cela n'est pas obligatoire. En effet, lorsque la source de photons SP comprend plusieurs (au moins deux) sous-parties (ici des diodes électroluminescentes), le nombre de premiers trous traversants TT1 peut être inférieur au nombre de sous-parties. Dans ce cas, seules les sous-parties associées respectivement à des premiers trous traversants TT1 sont mutualisées pour le rétroéclairage de la pièce de tissu PT et l'éclairage de la zone Z. Ainsi, lorsque l'autre équipement à éclairer est une boîte à gants dont l'accès est contrôlé par une porte montée à rotation, on peut envisager de ne faire fonctionner les sous-parties associées respectivement à des premiers trous traversants TT1 que lorsque la porte est ouverte (au moins partiellement). En cas d'alimentation électrique simultanée (et donc non différenciée) de toutes les sous-parties, toutes ces dernières génèrent des photons dès lors que le rétroéclairage a été décidé.

Par exemple, et comme illustré non limitativement sur la figure 2, au moins un premier trou traversant TT1 peut loger une pièce translucide PD qui est propre à diffuser dans la zone Z les photons générés par la source de photons SP et qu'elle reçoit. Par exemple, la (chaque) pièce translucide PD peut être réalisée en polycarbonate (ou PC), et plus préférentiellement en PC « TARFLON » (marque déposée) qui favorise la diffusion des photons.

On notera également qu'au moins un premier trou traversant TT1 peut définir une partie au moins d'un élément graphique choisi parmi une marque (nom ou emblème), un logo, et un dessin, par exemple. Il est aussi possible que plusieurs (au moins deux) premiers trous traversants TT1 participent ensemble à la définition d'un même élément graphique. Dans ce cas, ces premiers trous traversants TT1 définissent respectivement des sous-parties différentes et complémentaires de l'élément graphique.

Egalement par exemple, et comme illustré non limitativement sur les figures 1 à 3, l'équipement ES peut aussi comprendre une seconde paroi P2 rigide, translucide, intercalée entre sa source de photons SP et la seconde face interne FI2 de sa pièce de tissu PT, et à laquelle est couplée cette pièce de tissu PT. On comprendra que cette seconde paroi P2 sert ici à supporter au moins la pièce de tissu PT et à conférer de la rigidité à la peau de la planche de bord ES (dont elle fait partie).

Par exemple, cette seconde paroi P2 peut être réalisée en polypropylène (ou PP) ou bien en polyméthacrylate de méthyle acrylique (ou « PMMA »).

Egalement par exemple, et comme illustré non limitativement sur les figures 1 à 3, la seconde paroi P2 peut être solidarisée à la première paroi P1, en étant espacée de cette dernière (P1) d'une distance choisie. Par exemple, cette solidarisation peut se faire au moyen d'éléments de fixation EF tels que des vis ou des rivets éventuellement bouterollés.

Egalement par exemple, et comme illustré non limitativement et au moins partiellement sur les figures 1 à 3, l'équipement ES peut aussi comprendre une première couche de mousse d'espacement CME1 translucide et intercalée entre la seconde paroi P2 et la seconde face interne FI2 de la pièce de tissu PT, et/ou une seconde couche de mousse d'espacement CME2 translucide et intercalée entre la seconde paroi P2 et la source de photons SP. La seconde paroi P2 sert donc de support à la première couche de mousse d'espacement CME1 et/ou à la seconde couche de mousse d'espacement CME2.

On notera que dans les deux exemples illustrés respectivement sur les figures 1 et 2 l'équipement ES comprend seulement une première couche de mousse d'espacement CME1 translucide et intercalée entre la seconde paroi P2 et la seconde face interne FI2 de la pièce de tissu PT. Mais dans le troisième exemple illustré sur la figure 3 l'équipement ES comprend non seulement une première couche de mousse d'espacement CME1 translucide et intercalée entre la seconde paroi P2 et la seconde face interne FI2 de la pièce de tissu PT, mais aussi une seconde couche de mousse d'espacement CME2 translucide et intercalée entre la seconde paroi P2 et la source de photons SP. On pourrait aussi envisager un quatrième exemple dans lequel l'équipement ES ne comprend qu'une seconde couche de mousse d'espacement CME2 translucide et intercalée entre la seconde paroi P2 et la source de photons SP.

On notera également que la première couche de mousse d'espacement CME1 fait, ici, partie de la peau de la planche de bord ES, avec la seconde paroi P2 et la pièce de tissu PT.

Par exemple, l'éventuelle première couche de mousse d'espacement CME1 peut être solidarisée fixement à une face (ici supérieure) de la seconde paroi P2 par collage (au moyen d'une couche de colle ou d'au moins un ruban adhésif autocollant biface). Egalement par exemple, l'éventuelle seconde couche de mousse d'espacement CME2 peut être solidarisée fixement à une autre face (ici inférieure) de la seconde paroi P2 par collage (au moyen d'une couche de colle ou d'au moins un ruban adhésif autocollant biface). Egalement par exemple, la pièce de tissu PT peut être solidarisée fixement à une face (ici supérieure) de l'éventuelle première couche de mousse d'espacement CME1 par collage (au moyen d'une couche de colle ou d'au moins un ruban adhésif autocollant biface).

Egalement par exemple, l'éventuelle première CME1 ou seconde CME1 couche de mousse d'espacement peut être réalisée dans une mousse polyuréthane (ou PU).

Egalement par exemple, et comme illustré non limitativement sur la figure 3, l'équipement ES peut aussi comprendre un film réflecteur FR intercalé entre la source de photons SP et la première face interne FI1 de la première paroi P1. Ce film réflecteur FR est propre à réfléchir les photons, générés par la source de photons SP et qu'il reçoit, vers la seconde face interne FI2 de la pièce de tissu PT. Cela permet d'améliorer le rétroéclairage. De plus, ce film réflecteur FR comprend un second trou traversant TT2 en correspondance de chaque premier trou traversant TT1 pour permettre aux photons de passer vers ce dernier (TT1).

Par exemple, cet éventuel film réflecteur FR peut être métallique ou peut être une paroi munie d'un revêtement ou matiérage réfléchissant.

Egalement par exemple, le film réflecteur FR peut être solidarisé fixement à la première face interne FI1 de la première paroi P1 par collage (au moyen d'une couche de colle ou d'au moins un ruban adhésif autocollant biface).

Egalement par exemple, et comme illustré non limitativement sur les figures 1 et 2, l'équipement ES peut aussi comprendre une carte électronique CE transparente et sur laquelle sont installés la source de photons SP et des composants et/ou circuit(s) électronique(s) permettant de contrôler l'alimentation et le fonctionnement de cette source de photons SP. Par exemple, cette carte électronique CE transparente peut être une carte à circuits imprimés de type flexible PCB (« Printed Circuit Board »).

Dans ce cas, la carte électronique CE transparente peut être solidarisée fixement à la première face interne FI1 de la première paroi P1 par collage (au moyen d'une couche de colle ou d'au moins un ruban adhésif autocollant biface).

Egalement par exemple, et comme illustré non limitativement sur la figure 3, la source de photons SP peut être intégrée ou encapsulée dans un matériau transparent, comme par exemple un silicone. Elle peut alors ainsi faire partie d'une matrice de diodes électroluminescentes encapsulée CS.

Dans ce cas, la matrice de diodes électroluminescentes encapsulée CS peut être solidarisée fixement à la première face interne FI1 de la première paroi P1 ou à une face (ici supérieure) de l'éventuel film réflecteur FR par collage (au moyen d'une couche de colle ou d'au moins un ruban adhésif autocollant biface).

## Revendications

1. Equipement (ES) propre à équiper un système et comprenant une première paroi (P1) et une pièce de tissu (PT) comportant respectivement des première (FI1) et seconde (FI2) faces internes entre lesquelles est installée une source de photons (SP) propre à générer des photons assurant un rétroéclairage de ladite seconde face interne (FI2), **caractérisé en ce que** ladite première paroi (P1) comprend au moins un premier trou traversant (TT1) propre à être traversé par des photons générés destinés à éclairer une zone (Z) située devant une face externe (FE1) de ladite première paroi (P1), opposée à ladite première face interne (FI1).

2. Equipement selon la revendication 1, **caractérisé en ce qu'**au moins un premier trou traversant (TT1) loge une pièce translucide (PD) propre à diffuser dans ladite zone (Z) lesdits photons générés qu'elle reçoit.

3. Equipement selon la revendication 1 ou 2, **caractérisé en ce qu'**au moins un premier trou traversant (TT1) définit une partie au moins d'un élément graphique choisi parmi une marque, un logo, et un dessin.

4. Equipement selon l'une des revendications 1 à 3, **caractérisé en ce qu'**il comprend un film réflecteur (FR) intercalé entre ladite source de photons (SP) et ladite première face interne (FI1), propre à réfléchir lesdits photons générés qu'il reçoit vers ladite seconde face interne (FI2), et comprenant un second trou traversant (TT2) en correspondance de chaque premier trou traversant (TT1) pour le passage de photons vers ce dernier (TT1).

5. Equipement selon l'une des revendications 1 à 4, **caractérisé en ce qu'**il comprend une seconde paroi (P2) translucide, intercalée entre ladite source de photons (SP) et ladite seconde face interne (FI2), et à laquelle est couplée ladite pièce de tissu (PT).

6. Equipement selon la revendication 5, **caractérisé en ce que** ladite seconde paroi (P2) est solidarisée à ladite première paroi (P1), en étant espacée de cette dernière (P1) d'une distance choisie.

7. Equipement selon la revendication 5 ou 6, **caractérisé en ce qu'**il comprend une première couche de mousse d'espacement (CME1) translucide et intercalée entre ladite seconde paroi (P2) et ladite seconde face interne (FI2) et/ou une seconde couche de mousse d'espacement (CME2) translucide et intercalée entre ladite seconde paroi (P2) et ladite source de photons (SP).

8. Système, **caractérisé en ce qu'**il comprend au moins un équipement (ES) selon l'une des revendications 1 à 7.

9. Système selon la revendication 8, **caractérisé en ce qu'**il constitue un véhicule.

10. Système selon la revendication 9, **caractérisé en ce que** ledit équipement (ES) est choisi parmi une planche de bord et un accoudoir de porte latérale.
